# EUROPEAN PATENT SPECIFICATION

(11) **EP 0 425 220 B1**
(45) Date of publication and mention of the grant of the patent: **13.07.1994**
(21) Application number: 90311562.4
(22) Date of filing: 22.10.1990
(51) Int. Cl.: F16D 3/41

(54) **Universal joint**
Kreuzgelenk
Joint universel

(30) Priority: 23.10.1989 JP 123743/89 U
(43) Date of publication of application: 02.05.1991
(73) Proprietor: FUJI KIKO COMPANY LIMITED, Tokyo (JP)
(72) Inventor: Yamamoto, Yoshima, c/o Fuji Kiko Co. Ltd., Kosai-shi, Shizuoka-ken (JP)
(74) Representative: Blanco White, Henry Nicholas

(56) References cited:
- DE-A- 2 120 569
- FR-A- 1 202 022
- FR-A- 2 231 261
- FR-A- 2 242 003
- FR-A- 2 489 906

## Description

The present invention relates to a structure of an universal joint applicable to a steering system of an automotive vehicle.

An universal joint is a joint used to link a pair of shafts at predetermined angle and to transimit rotational torque from one shaft to the other, use, for example, in a steering system of an automative vehicle.

An automotive steering system includes a steering shaft rotatably supported at a predetermined tilt angle in a vehicle compartment, a steering gear box disposed at a front portion of the vehicle body, and a universal joint with a low frictional coefficient intervening between intermediate shafts.

The universal joint includes a pair of yoke portions which face with each other and rotatably link the intermediate shafts via a spider.

In one previously proposed form of universal joint, a link portion of the universal joint linking the pair of yoke portions and spider includes a hole penetrated into the pair of yoke portions, a bearing cup fitted into the hole, a trunnion of the spider with a needle bearing inserted into the bearing cup, and a seal ring which houses a lubricant and closely contacted against the bearing cup and spider. A circular projection having a predetermined area is projected from the outside of the center of the bearing cup toward its inside. A rough surface having convex and recess is formed on the projection. The rough surface is contacted against an end surface of the spider with a lubricant such as grease on the rough surface of the projection. A stopper is formed on the pair of yokes and fixed to the bearing cup. Thus, swing torque (friction) between the trunnion and yokes can relatively be reduced.

However, in the previously proposed structure of a universal joint described above, trouble occrs such that steering force is heavy making a steering wheel difficult to return to an original state when applied to a vehicle in which an auxiliary output such as a hydraulic system is used to relieve the steering force, i.e., a so called power assisted steering system.

This is because the swing torque between the trunnions and the pair of yoke portions is relatively large. Hence, more improvement is required for the universal joint structure.

FR-A-1 202 022 discloses a universal joint structure in which a sleeve of synthetic material, which may be supplemented by needle bearings, is provided between a trunnion and a bearing cup, and the sleeve may extend as a lining over the bottom of the cup, abutting the end of the trunnion.

DE-A-2 120 569, on which the preamble of claim 1 is based, discloses a universal joint structure in which a trunnion of the spider is received in a bearing cup, with needle bearings interposed, and a bulge formed in the centre of the bottom of the bearing cup provides point contact with the middle of the end face of the trunnion.

It is an object of the present invention to provide an improved structure of an universal joint in which swing torque can be reduced, with a high quality sealing characteristic, requiring little structural modification and offering high reliability.

The invention provides a universal joint structure, comprising: a pair of yoke portions facing with each other: a spider linking the pair of yoke portions to each other so as to enable flexing of both yoke portions, said spider being linked to cylindrical trunnions fitted into holes defined by said pair of yoke portions via bearing cups and each of said trunnions having a free end surface being wholly flat and opposed to each of said bearing cups, and each of said bearing cups having a projection toward each of said end surfaces of the trunnions, characterised in that said free end surfaces are coated with a solid lubricant and said solid lubricant of the free end surfaces of the trunnions are contacted with said projections of the bearing cups in a single point-to-point contact form.

In the drawings:

Fig. 1 is a cross sectional view of an essential portion of an universal joint in a preferred embodiment according to the present inveniton.

Fig. 2 is a partially enlarged view of the essential portion shown in Fig. 1.

Fig. 3 is a partially cross sectioned view of the universal joint and a peripheral vehicle part.

Reference will hereinafter be made to the drawings in order to facilitate a better understanding of the present invention.

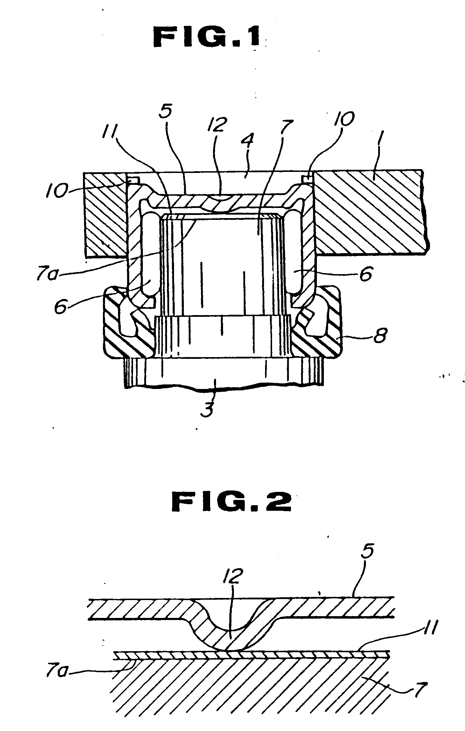

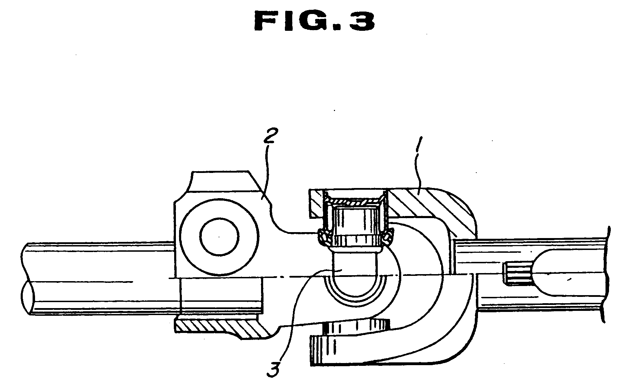

Fig. 1 shows a cross sectional view of a linking portion between the pair of yoke portions and trunnion in an universal joint according to the present invention. Fig. 2 shows a partially expanded view of Fig. 1. In Fig. 3, numerals 1 and 2 denote a pair of yoke portions of the universal joint and 3 denotes a spider. In Fig. 1, numeral 4 denotes a hole into which a bearing cup 5 is fitted. The hole 4 is provided in the pair of yoke portions 1 and 2. A trunnion 7 of the spider 3 is inserted into the bearing cup 5. Crease is housed in a seal ring 8. The seal ring 8 is fitted to the spider 3 and closely contacted against the bearing cup 5 and the spider 3. An end surface 7a of the trunnion 7 is coated with a solid lubricant 11 such as a fluoride series resin, i.e., Molybdenum disulfide or Teflon. On the other hand, a projection 12 having an arc cross section is formed on the center of the bearing cup 5 so as to project toward an internal side of the end surface 7a so that the projection 12 is contacted against the solid lubricant 11. The bearing cup 5 is restricted so as to prevent it from 'popping out' by means of the stopper 10.

When the trunnion 7 rotates, the swing torque generated with the bearing cup 5 on a contact portion can be expressed as T = F x » x ℓ, wherein F denotes a predetermined synthetic force for the pair of yoke portions 1 and 2 to push the bearing cup 5, » denotes a frictional coefficient, and ℓ denotes a contact area (radius) between the projection 13 and end surface of the trunnion 7. In the preferred embodiment, T = F x ». That is to say, the projection 13 is brought in point contact with the trunnion 7 and the end surface 7a is coated with the solid lubricant 11. Therefore, the symbol ℓ expressed in the above equation is substantially equal to 1. The circular projection in the previously proposed universal joint is formed by a predetermined radius (e.g., 1. 75 mm) from its center and the end surface is rough.

As described hereinabove, since in the universal joint according to the present invention the solid lubricant is coated on the end surface of the trunnion and the projection having the arc cross section is formed on the bearing cup into which the trunnion is fitted, the projection being contacted against the end surface of the trunnion, the swing torque of the universal joint can be remarkably reduced. Therefore, the operativity of the power steering system can be improved and the feel of the steering operation can also be improved.

It will fully be appreciated by those skilled in the art that the foregoing description is made in terms of the preferred embodiment and various changes and modification may be made without departing from the scope of the present invention which is to be defined by the appended claims.

## Claims

1. A universal joint structure, comprising: a pair of yoke portions (1, 2) facing with each other: a spider (3) linking the pair of yoke portions to each other so as to enable flexing of both yoke portions, said spider being linked to cylindrical trunnions (7) fitted into holes (4) defined by said pair of yoke portions via bearing cups (5) and each of said trunnions (7) having a free end surface (7a) being wholly flat and opposed to each of said bearing cups (5), and each of said bearing cups (5) having a projection (12) toward each of said end surfaces (7a) of the trunnions (7), characterised in that said free end surfaces (7a) are coated with a solid lubricant (11) and said solid lubricant (11) of the free end surfaces (7a) of the trunnions (7) are contacted with said projections (12) of the bearing cups (5) in a single point-to-point contact form.

2. A universal joint structure as claimed in claim 1, wherein the solid lubricant (11) is of a fluoride series resin.

3. A universal joint structure as claimed in claim 1 or claim 2, wherein said holes (4) are provided on one of said pair of yoke portions (1, 2) and the bearing cups (5) are inserted into said holes.

4. A universal joint structure as claimed in claim 3, wherein a needle bearing structure (16) is provided between each bearing cup (5) and each trunnion (7).

5. A universal joint structure as claimed in any one of claims 1 to 4, wherein the spider (3) links the pair of yoke portions (1, 2) with a shaft so as to enable displacement of the shaft with respect to an axial direction thereof.

6. A universal joint structure as claimed in claim 5, wherein the shaft is an intermediate shaft of a vehicular steering system.

## Patentansprüche

1. Eine Kreuzgelenkkonstruktion, die umfaßt: ein Paar Gabelabschnitte (1, 2), die einander zugewandt sind; ein Zapfenkreuz (3), das das Paar Gabelabschnitte miteinander verbindet und so die gelenkige Bewegung beider Gabelabschnitte ermöglicht, wobei das Zapfenkreuz mit zylindrischen Drehzapfen (7) verbunden ist, die über Lagerschalen (5) in Löcher (4) eingepaßt sind, die durch das Paar Gabelabschnitte gebildet werden, und jeder der Drehzapfen (7) eine freie Endfläche (7a) hat, die vollständig flach ist und jeder der Lagerschalen (5) gegenüberliegt, und jede der Lagerschalen (5) einen Vorsprung (12) in Richtung der Abschlußflächen (7a) der Drehzapfen (7) aufweist, **dadurch gekennzeichnet**, daß die freien Abschlußflächen (7a) mit einem festen Schmiermittel (11) beschichtet sind und das feste Schmiermittel (11) der freien Abschlußflächen (7a) der Drehzapfen (7) mit den Vorsprüngen (12) der Lagerschalen (5) in Einzel-Punkt-auf-Punkt-Berührung in Kontakt ist.

2. Kreuzgelenkkonstruktion nach Anspruch 1, wobei das feste Schmiermittel (11) ein Flourreihenharz ist.

3. Kreuzgelenkkonstruktion nach Anspruch 1 oder Anspruch 2, wobei die Löcher (4) an einem der Paare von Gabelabschnitten (1, 2) vorhanden sind, und die Lagerschalen (5) in die Löcher eingeführt sind.

4. Kreuzgelenkkonstruktion nach Anspruch 3, wobei ein Nadellager (16) zwischen jeder Lagerschale (5) und jedem Drehzapfen (7) vorhanden ist.

5. Kreuzgelenkkonstruktion nach einem der Ansprüche 1 bis 4, wobei das Zapfenkreuz (3) das Paar Gabelabschnitte (1, 2) mit einer Welle verbindet, um die Verschiebung der Welle in bezug auf eine axiale Richtung derselben zu ermöglichen.

6. Kreuzgelenkkonstruktion nach Anspruch 5, wobei die Welle eine Zwischenwelle eines Fahrzeuglenksystems ist.

## Revendications

1. Structure de joint universel comprenant : une paire de portions formant étrier (1, 2) orientées l'une vers l'autre; un croisillon (3) reliant la paire de portion formant étrier l'une à l'autre de façon à permettre un fléchissement des deux portions formant étrier, ledit croisillon étant relié à des tourillons cylindriques (7) adaptés dans des trous (4) définis par ladite paire de portions formant étrier via des coupelles de palier (5) et chacun desdits tourillons (7) présentant une surface d'extrémité libre (7a) qui est entièrement plate et opposée à chacune desdites coupelles de palier (5), et chacune desdites coupelles de palier (5) présentant une saillie (12) vers chacune desdites surfaces d'extrémité (7a) des tourillons (7), caractérisée en ce que lesdites surfaces d'extrémité libres (7a) sont recouvertes d'un lubrifiant solide (11), et ledit lubrifiant solide (11) des surfaces d'extrémité libre (7a) des tourillons (7) viennent en contact avec lesdites saillies (12) des coupelles de palier (5) sous une forme de contact unique point à point.

2. Structure de joint universel selon la revendication 1, dans laquelle le lubrifiant solide (11) est une résine de la série des fluorures.

3. Structure de joint universel selon la revendication 1 ou la revendication 2, dans laquelle lesdites roues (4) sont prévues sur l'une desdites paires de portions formant étrier (1, 2), et lesdites coupelles de palier (5) sont insérées dans lesdits trous.

4. Structure de joint universel selon la revendication 3, dans laquelle un roulement à aiguilles (16) est prévu entre chaque coupelle de palier (5) et chaque tourillon (7).

5. Structure de joint universel selon l'une des revendications 1 à 4, dans laquelle le croisillon (3) relie une paire de portions formant étrier (1, 2) à un arbre de façon à permettre un déplacement de l'arbre relativement à une direction axiale de celui-ci.

6. Structure de joint universel selon la revendication 5, dans laquelle l'arbre est un arbre intermédiaire d'un système de direction de véhicule.
